# FASCICULE DE BREVET EUROPEEN

(11) **EP 1 945 395 B1**
(45) Date de publication et mention de la délivrance du brevet: **25.02.2009**
(21) Numéro de dépôt: 06808105.8
(22) Date de dépôt: 11.09.2006
(51) Int. Cl.: B23B 47/34

(54) **DISPOSITIF DE PERÇAGE**
PERFORIERVORRICHTUNG
PERFORATING DEVICE

(30) Priorité: 14.09.2005 FR 0509391
(43) Date de publication de la demande: 23.07.2008
(73) Titulaire: AIRBUS France, 31060 Toulouse (FR)
(72) Inventeur: JANSON, Jean-Philippe, 80800 Le Hamel-Bouzencourt (FR)
(74) Mandataire: Stankoff, Hélène
(86) Numéro de dépôt international: PCT/FR2006/002079
(87) Numéro de publication internationale: WO 2007/031631

(56) Documents cités:
- EP-A- 1 500 780
- DE-A1- 2 436 340
- DE-A1- 10 109 990
- DE-A1- 19 718 275
- US-A- 4 182 588
- US-A- 5 342 152
- US-A1- 2001 020 808

## Description

La présente invention concerne un dispositif de perçage.

La présente invention se rapporte de façon générale au domaine du perçage intégrant notamment les techniques de perçage, mais également des techniques de fraisurage.

De manière générale, la présente invention concerne un dispositif de perçage comprenant un outil de coupe tournant, tel qu'un foret.

Dans ce type de technique de perçage, la qualité du résultat obtenu dépend de nombreux paramètres et notamment de la bonne évacuation des copeaux produits lors du perçage. En effet, si cette évacuation n'est pas efficace et qu'une partie des copeaux reste en place, ceux-ci peuvent alors être entraînés par rotation de l'outil de coupe et dégrader ainsi la géométrie ou l'état de surface du trou percé.

En particulier, lorsqu'un dispositif de perçage comprend un outil de coupe entraîné d'une part en rotation et d'autre part en translation, l'avance régulière de l'outil de coupe tout au long de l'opération de perçage a pour effet de provoquer la formation de copeaux longs, difficiles à évacuer.

Le document US 5 342 152 décrit un dispositif comprenant un outil de coupe entrainé en rotation et en translation et soumis à une oscillation le long de l'axe de rotation, permettant la variation de l'épaisseur des copeaux et la coupe de ces copeaux.

Le rapport entre la vitesse de translation et la vitesse de rotation de l'outil de coupe est variable pendant la rotation dudit outil de coupe.

Ainsi, en modifiant le rapport entre la vitesse de translation et la vitesse de rotation pendant la rotation de l'outil, l'épaisseur des copeaux formés est modulée de telle sorte que le copeau obtenu est fragilisé.

Ces copeaux irréguliers sont ainsi plus faciles à évacuer, notamment par fragmentation de ces copeaux.

La présente invention a pour but de proposer un dispositif de perçage permettant d'assurer une évacuation satisfaisante des copeaux, utilisant des moyens précis et fiables.

A cet effet, la présente invention vise un dispositif de perçage comprenant un outil de coupe, des moyens d'entraînement en rotation de cet outil de coupe et des moyens d'entraînement en translation du même outil de coupe, le rapport entre la vitesse de rotation et la vitesse de translation étant variable pendant la rotation de l'outil de coupe.

Selon l'invention, le dispositif de perçage comprend un train d'engrenage adapté à synchroniser les moyens d'entraînement en rotation aux moyens d'entraînement en translation, le rapport de vitesse entre un pignon d'entraînement du train d'engrenage, lié en rotation aux moyens d'entraînement en rotation de l'outil de coupe, et un pignon de transmission des moyens d'entraînement en translation étant inversé au moins une fois pendant une rotation de l'outil de coupe.

Il est possible en intervenant directement sur les pignons d'un train d'engrenage de l'outil de modifier et annuler périodiquement la vitesse de translation de l'outil de coupe.

Selon une caractéristique de l'invention, la vitesse de rotation ou la vitesse de translation de l'outil de coupe est variable sur au plus une rotation de l'outil de coupe.

On évite ainsi la formation de copeaux en hélice, plus difficiles à évacuer.

En pratique, la vitesse de translation de l'outil de coupe est nulle au moins une fois pendant une rotation de l'outil de coupe.

Le copeau ainsi formé lors de l'avancement de l'outil est fractionné pendant la rotation de l'outil grâce à l'avancement par palliers successifs de l'outil de coupe.

Les morceaux de copeau de faible longueur sont ainsi évacués plus facilement.

En pratique, les moyens d'entraînement en translation comprennent une broche filetée liée en rotation avec les moyens d'entraînement en rotation de l'outil de coupe et un pignon taraudé monté sur la broche filetée, le rapport de vitesse entre un pignon d'entrée lié à la broche filetée et le pignon taraudé étant inversé au moins une fois pendant une rotation du pignon d'entrée.

D'autres particularités et avantages de l'invention apparaîtront encore dans la description ci-après. Aux dessins annexés, donnés à titre d'exemples non limitatifs :
- la figure 1 est une vue schématique illustrant un dispositif de perçage selon un mode de réalisation de l'invention ;
- la figure 2 est une vue schématique dans trois positions successives d'un train d'engrenage mis en oeuvre dans le dispositif de perçage de la figure 1, suivant un premier mode de réalisation ;
- la figure 3 est une courbe illustrant la vitesse relative des pignons du train d'engrenage de la figure 2 ; et
- les figures 4A et 4B sont des vues schématiques dans deux positions d'un train d'engrenage mis en oeuvre dans le dispositif de perçage de la figure 1, suivant un deuxième mode de réalisation de l'invention.

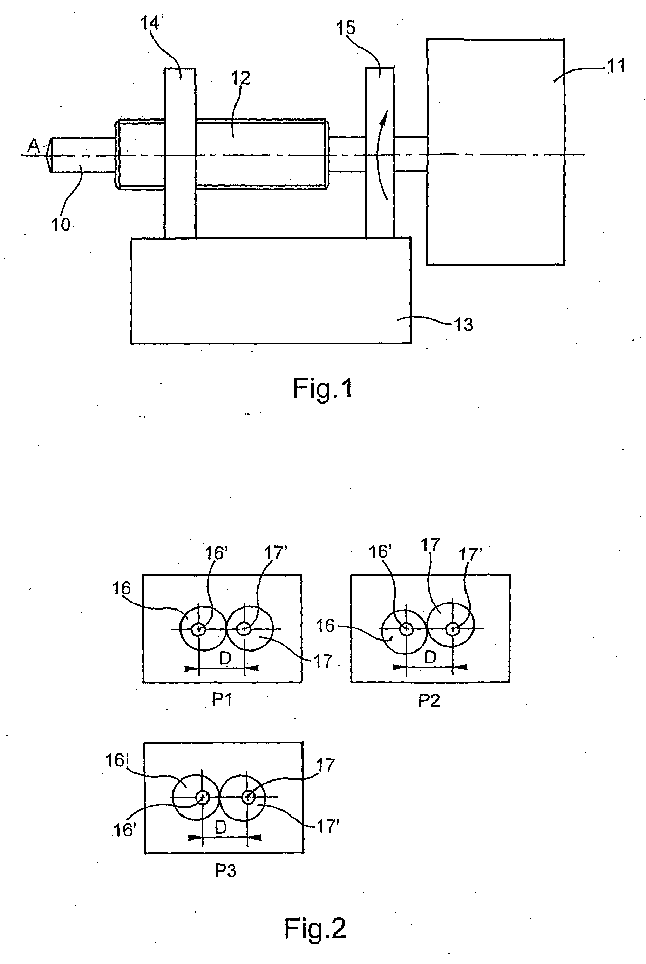

On va décrire tout d'abord en référence à la figure 1 un dispositif de perçage conforme à un mode de réalisation de l'invention.

Le dispositif de perçage comporte un outil tournant 10 tel qu'un foret, ou une fraise, adapté à réaliser une perforation ou un fraisage dans une tôle.

L'outil de coupe 10 est monté en rotation autour d'un axe A.

Le dispositif de perçage comporte à cet effet un moteur 11 adapté à entraîner en rotation suivant l'axe A l'outil de coupe 10.

Une broche filetée 12 est montée solidaire en rotation sur l'axe de rotation A. Le moteur 11 entraîne ainsi simultanément en rotation l'outil de coupe 10 et la broche filetée 12.

L'outil de coupe 10 est également adapté à se déplacer en translation. A cet effet, une boite de transmission 13 permet dans ce mode de réalisation de transmettre le mouvement de rotation en sortie du moteur 11 à un pignon taraudé 14 monté sur la broche filetée 12.

Ce pignon taraudé 14 est bloqué en translation par rapport à l'axe A de telle sorte que la rotation relative du pignon taraudé 14 et de la broche filetée 12 permet de déplacer en translation cette broche filetée 12 suivant l'axe A.

A cet égard, afin d'obtenir un mouvement d'avance de l'outil de coupe 10, il est nécessaire que la broche filetée 12 et le pignon taraudé 14 tournent à des vitesse différentes.

A titre d'exemple non limitatif, si la broche filetée 12 et le pignon taraudé 14 ont chacun un pas de vis à droite de 1 mm, et si la broche filetée 12 est entraînée en rotation à droite, à une vitesse de 1000 t/mn et que le pignon taraudé 14 est également entraîné en rotation via la boite de transmission 13 à une vitesse de rotation de 900 t/mn, la broche filetée se déplacera suivant l'axe A d'une valeur égale à 100 fois le pas de 1 mm des vis, c'est-à-dire à une vitesse de 100 mm/mn.

Cette vitesse de translation correspond à une avance de l'outil de coupe 10 de 0,1 mm par rotation.

Si cette vitesse de translation de l'outil de coupe 10 est régulière lors de la rotation de l'outil, les copeaux formés sont d'épaisseur régulière et de grande longueur, de telle sorte qu'ils sont difficiles à évacuer.

Pour remédier à cet inconvénient, il est prévu de modifier la vitesse de translation, ou bien encore la vitesse de rotation de l'outil de coupe 10 pendant la rotation de cet outil 10, afin de former des copeaux irréguliers, plus simples à évacuer.

Dans ce mode de réalisation, la vitesse de translation de l'outil de coupe, c'est-à-dire de la broche filetée 12 le long de l'axe A, est modifiée grâce à une modification au niveau de la boite de transmission 13.

En pratique, la boite de transmission permet de transmettre le mouvement de rotation en sortie du moteur 11, au niveau d'un pignon d'entrée 15 jusqu'au pignon taraudé 14 pour permettre de régler la vitesse de rotation du pignon taraudé 14 par rapport à la vitesse de rotation de la broche filetée 12.

Un train d'engrenage tel qu'illustré par exemple à la figure 2 peut être prévu au niveau de la boite de transmission 13 pour synchroniser le mouvement du pignon d'entrée 15 avec le mouvement de rotation du pignon taraudé 14.

Dans ce mode de réalisation tel qu'illustré à la figure 2, le train d'engrenage comprend deux pignons 16, 17. Ces pignons 16, 17 peuvent par exemple être de diamètre identique et présenter à leur périphérie une série de dents réparties régulièrement sur la périphérie de chaque pignon 16, 17.

Le pignon d'entrée 15 engrène par exemple avec un pignon d'entraînement 16 qui entraîne le pignon 17, ce dernier transmettant par l'intermédiaire d'un ou plusieurs pignons de renvoi son mouvement au pignon taraudé 14.

Ces pignons 16, 17 sont montés d'une manière excentrée par rapport à leur axe de rotation respectif 16', 17'. Ils sont excentrés d'une même valeur par rapport à l'axe de rotation 16', 17' et la distance D entre les axes de rotation 16', 17' est constante pendant la rotation des pignons 16, 17.

Ainsi, en considérant par exemple le pignon 16 comme un pignon d'entraînement, la vitesse de rotation au niveau de l'axe 17' du pignon entraîné 17 varie pendant une rotation du pignon d'entraînement 16.

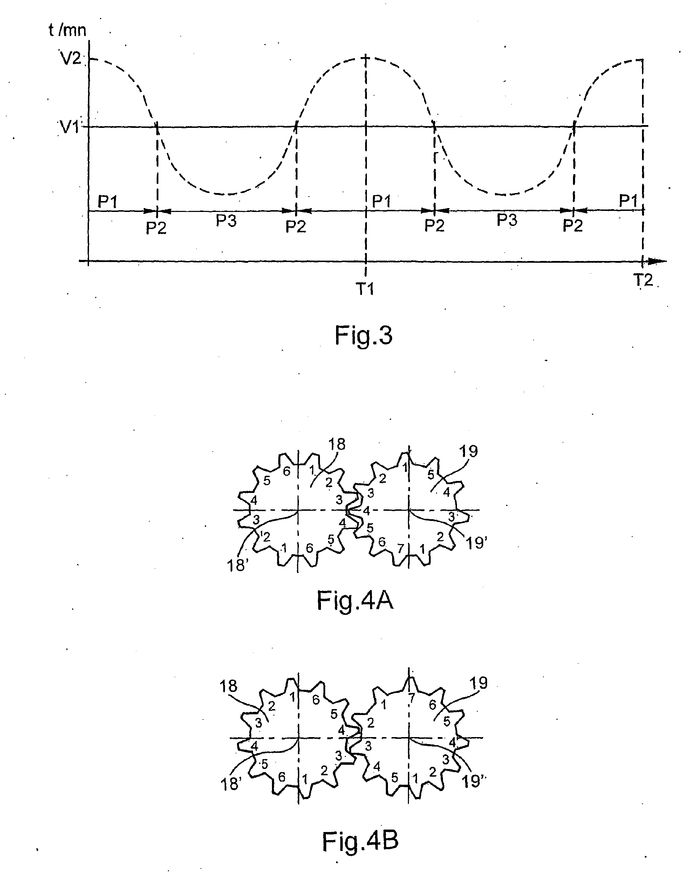

Comme bien illustré sur la figure 3, dans une première position P1, la vitesse V2 du pignon entraîné 17 est supérieure à la vitesse V1 du pignon d'entraînement 16. Cette vitesse V2 du pignon 17 diminue pour devenir égale à la vitesse V1 du pignon d'entraînement 16 lorsque les pignons 16, 17 sont dans la position P2, c'est-à-dire lorsque leur point d'engrenage est à une égale distance des axes de rotation 16', 17' des pignons 16, 17.

Puis dans la positon P3, la vitesse V2 du pignon entraîné 17 est inférieure à la vitesse V1 du pignon d'entraînement 16 jusqu'à ce que les deux pignons se retrouvent de nouveau dans une position P2.

Ainsi, lorsqu'un tel train d'engrenage est disposé au niveau de la boite de transmission 13 entre le pignon d'entrée 15 et le pignon taraudé 14, le rapport de vitesse entre le pignon d'entraînement 15 lié à la broche filetée 12 et le pignon taraudé 14 est inversé au moins une fois, et ici deux fois, pendant la rotation du pignon d'entrée 15.

En pratique, lorsque les vitesse V1, V2 sont identiques, dans la position P2 des .pignons 16, 17, la vitesse en rotation de la broche filetée 12 et du pignon taraudé 14 sont identiques de telle sorte que la vitesse de translation selon l'axe A de la broche filetée 12, et par conséquent de l'outil de coupe 10, est nulle.

Suivant le type de montage du pignon taraudé 14 sur la broche filetée 12, le sens de translation peut être inversé pendant chaque rotation de l'outil de coupe 10.

A titre d'exemple non limitatif, l'outil de coupe 10 peut reculer de 0,10 mm et avancer de 0,15 mm à chaque rotation.

En annulant ainsi au moins une fois la vitesse de translation de l'outil de coupe 10 pendant une rotation de cet outil de coupe, il est possible de fractionner les copeaux formés, ce qui facilite leur évacuation.

Bien entendu le mode de réalisation au niveau du train d'engrenage de la boite de transmission 13 permettant de modifier la vitesse de translation de l'outil de coupe 10 pendant sa rotation n'est nullement limitatif.

On a illustré sur les figures 4A et 4B un second mode de réalisation permettant également de moduler la vitesse de translation de l'outil de coupe 10.

Tel qu'illustré sur les figures 4A et 4B, le train d'engrenage comporte deux pignons 18, 19 de diamètre identique. L'un des pignons, ici le pignon entraîné 19 a un module évolutif, c'est-à-dire qu'il comporte des dents disposées à intervalles irréguliers sur sa périphérie.

Dans ce mode de réalisation, le premier pignon 18 comporte un nombre prédéterminé de dents, ici égal à douze, réparties selon un pas régulier sur sa périphérie. Le second pignon 19 comporte le même nombre de dents mais réparties selon un pas irrégulier sur sa périphérie. Dans ce mode de réalisation, cinq dents sont réparties sur la moitié de la périphérie du second pignon 19 et sept dents sont réparties sur l'autre moitié de la périphérie du second pignon 19.

Bien entendu, cette répartition irrégulière des dents sur ce second pignon 19 pourrait être différente, tant que l'entraînement de ce second pignon 19 par le premier pignon 18 reste possible.

Ainsi, dans la position telle qu'illustrée à la figure 4A, lorsque le premier pignon 18 est entraîné en rotation, la vitesse au niveau de l'axe 19' du second pignon 19 est supérieure à la vitesse de rotation au niveau de l'axe 18' du premier pignon d'entraînement 18.

Réciproquement, dans la position telle qu'illustrée à la figure 4B, la vitesse de rotation en sortie de l'axe 19' du second pignon 19 est inférieure à la vitesse de rotation au niveau de l'axe 18' du premier pignon 18.

Ce train d'engrenage disposé au niveau de la transmission d'un dispositif tel qu'illustré à la figure 1 permet également d'annuler la vitesse de translation de l'outil de coupe 10 au moins une fois, et ici deux fois, pendant la rotation de l'outil de coupe 10. ,

Bien entendu la présente invention n'est nullement limitée aux exemples de réalisation, décrits ci-dessus et de nombreuses modifications peuvent être apportées à ces exemples de réalisation sans sortir du cadre de l'invention.

En particulier, d'autres types de train d'engrenage peuvent être utilisés, en utilisant par exemple des pignons de forme complexe, et par exemple ovale ou patatoïde.

De même, le mode de réalisation tel qu'illustré à la figure 1 n'est pas limitatif, d'autres types de moyens d'entraînement en translation de l'outil de coupe pouvant être utilisés, par exemple grâce à un montage sur un chariot monté en translation de l'ensemble de l'outil et de ces moyens de rotation.

Il est ainsi possible en agissant sur les moyens d'entraînement en translation du chariot de modifier la vitesse de translation de l'outil de coupe pendant une rotation de cet outil.

Par ailleurs, la vitesse de translation de l'outil de coupe peut demeurer constante, seule la vitesse de rotation variant lors de la rotation de l'outil de coupe.

## Revendications

1. Dispositif de perçage comprenant un outil de coupe (10), des moyens d'entraînement en rotation (11) dudit outil de coupe (10) et des moyens d'entraînement en translation (12, 14) dudit outil de coupe (10), le rapport entre la vitesse de rotation et la vitesse de translation étant variable pendant la rotation de l'outil de coupe (10), **caractérisé en ce qu'**il comprend un train d'engrenage (16, 17 ; 18, 19) adapté à synchroniser lesdits moyens d'entraînement en rotation (11) auxdits moyens d'entraînement en translation (12, 14) et **en ce que** le rapport de vitesse entre un pignon d'entraînement (16 ; 18) dudit train d'engrenage, lié en rotation auxdits moyens d'entraînement en rotation (11) dudit outil de coupe (10) et un pignon de transmission (17 ; 19) des moyens d'entraînement en translation est inversé au moins une fois pendant une rotation dudit outil de coupe (10).

2. Dispositif de perçage conforme à la revendication 1, **caractérisé en ce que** la vitesse de rotation dudit outil de coupe (10) est variable sur au plus une rotation de l'outil de coupe (10).

3. Dispositif de perçage conforme à l'une des revendications 1 ou 2, **caractérisé en ce que** la vitesse de translation dudit outil de coupe (10) est variable sur au plus une rotation dudit outil de coupe (10).

4. Dispositif de perçage conforme à la revendication 3, **caractérisé en ce que** la vitesse de translation dudit outil de coupe (10) est nulle au moins une fois pendant une rotation dudit outil de coupe (10).

5. Dispositif de perçage conforme à l'une des revendications 1 à 4, **caractérisé en ce que** les moyens d'entraînement en translation comprennent une broche filetée (12) liée en rotation avec lesdits moyens d'entraînement en rotation (11) dudit outil de coupe (10) et un pignon taraudé (14) monté sur ladite broche filetée (12), le rapport de vitesse entre un pignon d'entrée (15) lié à la broche filetée (12) et le pignon taraudé (14) étant inversé au moins une fois pendant une rotation dudit pignon d'entrée (15).

6. Dispositif de perçage conforme à l'une des revendications 1 à 5, **caractérisé en ce que** ledit train d'engrenage comprend deux pignons (16,17) de diamètre identique et excentrés d'une même valeur par rapport à leur axe de rotation respectif (16',17'), la distance (D) entre lesdits axes de rotation (16',17') étant constante pendant la rotation desdits pignons (16,17).

7. Dispositif de perçage conforme à l'une des revendications 1 à 5, **caractérisé en ce que** le train d'engrenage comporte deux pignons (18, 19) de diamètre identique, un premier pignon (18) ayant un nombre prédéterminé de dents réparties selon un pas régulier, et le second pignon (19) ayant un même nombre prédéterminé de dents réparties selon un pas irrégulier.

## Claims

1. A boring device comprising cutting tool (10), means (11) for rotationally driving said cutting tool (10) and means (12, 14) for translationally driving said cutting tool (10), the ratio between the speed of rotation and the speed of translation being variable during the rotation of the cutting tool (10), **characterized in that** it comprises a gear train (16, 17 ; 18, 19) adapted to synchronize said rotationally driving means (11) with said translationally driving means (12, 14) and **in that** the speed ratio between a drive gear (16 ; 18) of said gear train, rotationally linked to said rotationally driving means (11) of said cutting tool (10) and a transmission gear (17 ; 19) of said translationally driving means is inversed at least once during one rotation of said cutting tool (10).

2. A boring device according to claim 1, **characterized in that** the speed of rotation of said cutting tool (10) is variable over at most one rotation of the cutting tool (10).

3. A boring device according to one of claims 1 or 2, **characterized in that** the speed of translation of said cutting tool (10) is variable over at most one rotation of said cutting tool (10).

4. A boring device according to claim 3, **characterized in that** the speed of translation of said cutting tool (10) is zero at least once during one rotation of said cutting tool (10).

5. A boring device according to one of claims 1 to 4, **characterized in that** the translationally driving means comprise a threaded shaft (12) rotationally linked to said rotationally driving means (11) of said cutting tool (10) and a tapped gear wheel (14) mounted on said threaded shaft (12), the speed ratio between an input gear wheel (15) linked to the threaded shaft (12) and the tapped gear wheel (14) being inverted at least once during one rotation of said input gear wheel (15).

6. A boring device according to one of claims 1 to 5, **characterized in that** said gear train comprises two gear wheels (16,17) of identical diameter and eccentric by the same amount relative to their respective rotational axis (16',17'), the distance (D) between said rotational axes (16',17') being constant during the rotation of said gear wheels (16,17).

7. A boring device according to one of claims 1 to 5, **characterized in that** the gear train comprises two gear wheels (18, 19) of identical diameter, a first gear wheel (18) having a predetermined number of teeth distributed with a regular spacing, and the second gear wheel (19) having the same predetermined number of teeth distributed with an irregular spacing.

## Patentansprüche

1. Vorrichtung zum Erzeugen eines Lochs, mit einem Schneidwerkzeug (10), Mitteln zum Antreiben des Schneidwerkzeugs (10) in Drehung und Mitteln zum Antreiben (12, 14) des Schneidwerkzeugs (10) in ,Translation, wobei das Verhältnis zwischen der Drehgeschwindigkeit und der Translationsgeschwindigkeit während der Drehung des Schneidwerkzeugs (10) variabel ist, **dadurch gekennzeichnet, dass** sie einen Getriebezug (16, 17; 18, 19) umfasst, der dazu geeignet ist, die Dreh,antriebsmittel (11) mit den Translationsantriebsmitteln (12, 14) zu synchronisieren, und dass das Übersetzungsverhältnis zwischen einem Antriebsritzel (16; 18) des Getriebezuges, das mit den Drehantriebsmitteln (11) des Schneidwerkzeugs (10) drehverbunden ist, und einem Vorgelegeritzel (17; 19) der Translationsantriebsmittel mindestens einmal während einer Drehung des Schneidwerkzeugs (10) umgekehrt wird.

2. Vorrichtung zum Erzeugen eines Lochs nach Anspruch 1, **dadurch gekennzeichnet, dass** die Drehgeschwindigkeit des Schneidwerkzeugs (10) bei höchstens einer Drehung des Schneidwerkzeugs (10) variabel ist.

3. Vorrichtung zum Erzeugen eines Lochs nach einem der Ansprüche 1 oder 2, **dadurch gekennzeichnet, dass** die Translationsgeschwindigkeit des Schneidwerkzeugs (10) bei höchstens einer Drehung des Schneidwerkzeugs (10) variabel ist.

4. Vorrichtung zum Erzeugen eines Lochs nach Anspruch 3, **dadurch gekennzeichnet, dass** die Translationsgeschwindigkeit des Schneidwerkzeugs (10) mindestens einmal während einer Drehung des Schneidwerkzeugs (10) gleich Null ist.

5. Vorrichtung zum Erzeugen eines Lochs nach einem der Ansprüche 1 bis 4, **dadurch gekennzeichnet, dass** die Translationsantriebsmittel eine Außengewindespindel (12), die mit den Mitteln zum Antreiben (12, 14) des Schneidwerkzeugs (10) in Translation drehverbunden ist, und ein Innengewinderitzel (14), das an der Außengewindespindel (12) angebracht ist, umfassen, wobei das Übersetzungsverhältnis zwischen einem mit der Außengewindespindel (12) verbundenen Eingangsritzel (16) und dem Innengewinderitzel (14) mindestens einmal während einer Drehung des Eingangsritzels (15) umgekehrt wird.

6. Vorrichtung zum Erzeugen eines Lochs nach einem der Ansprüche 1 bis 5. **dadurch gekennzeichnet, dass** der Getriebezug zwei Ritzel (16, 17) mit gleichem Durchmesser umfasst, die um denselben Wert bezüglich ihrer jeweiligen Drehachse 16', 17') außermittig sind, wobei der Abstand (D) zwischen den Drehachsen (16', 17') während der Drehung der Ritzel (16, 17) konstant ist.

7. Vorrichtung zum Erzeugen eines Lochs nach einem der Ansprüche 1 bis 5, **dadurch gekennzeichnet, dass** der Getriebezug zwei Ritzel (18, 19) mit gleichem Durchmesser umfasst, wobei ein erstes Ritzel (18) eine vorgegebene Anzahl von Zähnen hat, die mit regelmäßiger Schrittweite verteilt sind, und das zweite Ritzel (19) die gleiche vorgegebene Anzahl von Zähnen hat, die mit unregelmäßiger Schrittweite verteilt sind.
